# EUROPÄISCHE PATENTANMELDUNG

(11) **EP 4 831 466 A1**
(43) Veröffentlichungstag der Anmeldung: **28.10.2026**
(21) Anmeldenummer: 26167474.1
(22) Anmeldetag: 25.03.2026
(51) Int. Cl.: F02C 3/22, F02C 7/22

(54) **ANTRIEBSSYSTEM FÜR EIN FLUGZEUG UND VERFAHREN ZUM BETREIBEN EINES ANTRIEBS-SYSTEMS**

(30) Priorität: 22.04.2025 DE 102025115438
(71) Anmelder: Rolls-Royce Deutschland Ltd & Co KG, 15827 Blankenfelde-Mahlow (DE)
(72) Erfinder: STAUFER, Max, 15827 Blankenfelde-Mahlow (DE)

(57) **Zusammenfassung**

Die Erfindung betrifft ein Antriebssystem (100) für ein Flugzeug, mit einer Treibstoffperipherie (4) und zumindest einem Triebwerk (101) umfassend zumindest ein Brennkammersystem (1), wobei das Brennkammersystem (1) eine Brennkammer (2) und zumindest eine Injektoranordnung (3) aufweist, wobei die Injektoranordnung (3) zumindest eine Injektoreinheit (30) mit zumindest einer Treibstoffdüse (31) umfasst, und wobei die Treibstoffperipherie (4) zumindest eine Tankvorrichtung (40) zur Speicherung von kryogenem Treibstoff und ein Leitungssystem (41) zur Leitung des kryogenen Treibstoffes an die zumindest eine Injektoranordnung (3) aufweist. Eine verbesserte Effizienz wird dadurch erreicht, dass die zumindest eine Treibstoffdüse (31) zur Zugabe von flüssigem Treibstoff in die Brennkammer (2) ausgebildet ist (Fig. 1).

## Beschreibung

Die Erfindung betrifft ein Antriebssystem für ein Flugzeug, mit einer Treibstoffperipherie und zumindest einem Triebwerk umfassend zumindest ein Brennkammersystem, wobei das Brennkammersystem eine Brennkammer und zumindest eine Injektoranordnung aufweist, wobei die Injektoranordnung zumindest eine Injektoreinheit mit zumindest einer Treibstoffdüse umfasst, und wobei die Treibstoffperipherie zumindest eine Tankvorrichtung zur Speicherung von kryogenem Treibstoff und ein Leitungssystem zur Leitung des kryogenen Treibstoffes an die zumindest eine Injektoranordnung aufweist, sowie ein Verfahren zum Betreiben eines Antriebssystems.

Ein derartiges Antriebssystem ist in der US11603798B1 angegeben.

Die US 2022/0412563 A1, US 2022/0195928 A1 und WO 2014/130117 A2 offenbaren jeweils ein Flugzeugtriebwerk umfassend ein Treibstoffsystem mit einer kryogenen Tankvorrichtung.

In der US 6 205 770 B1 sind ein Raketenantrieb und ein Verfahren zum Betreiben desselben unter Zugabe von flüssigem kryogenem Wasserstoff angegeben.

Der Erfindung liegt die Aufgabe zugrunde, ein Antriebssystem der eingangs genannten Art sowie ein Verfahren zum Betreiben eines Antriebssystems mit einer verbesserten Effizienz bereitzustellen.

Bei dem Antriebssystem ist vorgesehen, dass die zumindest eine Treibstoffdüse zur Zugabe von flüssigem (kyogenen) Treibstoff in die Brennkammer ausgebildet ist. Dabei weisen in der Treibstoffdüse vorhandene Treibstoffkanäle einen entsprechend geringeren Strömungsquerschnitt auf als typischerweise in einer für einen entsprechenden Betriebsbereich zur Zufuhr von gasförmigem Treibstoff ausgebildeten Zufuhrdüse.

Die Treibstoffdüse kann, zusammen mit der übrigen Injektoreinrichtung, für eine Drallstabilisierung des Verbrennungsprozesses ausgelegt sein.

Auf diese Weise kann der kryogene Treibstoff, insbesondere Wasserstoff, und/oder Methan oder dergleichen, in flüssigem und/oder überkritischem Zustand in die Brennkammer zugegeben werden, wobei eine Erwärmung zur Verdampfung des kryogenen Treibstoffes zu dessen Überführung in gasförmigen Zustand nicht erforderlich ist. Entsprechend ist keine zusätzliche Einbringung von Verdampfungsenergie zur Verdampfung des Treibstoffes erforderlich, ebenso wenig wie eine entsprechende Verdampfungseinrichtung, insbesondere umfassend zumindest eine Wärmetauscheinrichtung. Dies resultiert vorteilhaft in einem besonders teileeffizienten Aufbau des Antriebssystems und/oder in einem besonders energieeffizienten Betrieb, da jegliche Einrichtung, die dem Zweck dient, den kryogenen Treibstoff zu verdampfen, dem eigentlichen Arbeitsprozess Energie entzieht, die nicht in den Arbeitsprozess zurückgeführt werden kann.

Vorzugsweise ist vorgesehen, dass die zumindest eine Treibstoffdüse als Spraydüse, mit einer Zerstäuberanordnung, ausgebildet ist. Die Zerstäuberanordnung kann beispielsweise als Druckzerstäuber oder Airblast-Zerstäuber ausgestaltet sein. So wird vorteilhaft im Betrieb auch in überkritischem Zustand der Treibstoff bei Zugabe in die Brennkammer aufgefächert bzw. der Treibstoffstrahl aufgerissen und die Reaktionsoberfläche innerhalb der Brennkammer zugunsten einer schadstoffarmen Verbrennung vergrößert.

In einer vorteilhaften Ausgestaltungsvariante kann vorgesehen sein, dass die Injektoranordnung zumindest eine weitere Injektoreinheit und/oder zumindest eine weitere Treibstoffdüse zur Zugabe von gasförmigem Treibstoff in die Brennkammer aufweist. Die weitere Treibstoffdüse weist insbesondere keine Zerstäuberanordnung auf und kann in die Injektoreinheit mit der Treibstoffdüse zur Zugabe von flüssigem Treibstoff integriert und/oder als separate Injektoreinheit ausgebildet sein. Auf diese Weise kann der Betrieb mit dem flüssigen und/oder überkritischen kryogenen Treibstoff vorteilhaft zumindest in manchen Betriebspunkten um die Eindüsung mit gasförmigem Treibstoff ergänzt werden oder der gasförmige Treibstoff erforderlichenfalls (je nach Betriebssituation) separat eingebracht werden. Vorzugsweise ist die weitere Treibstoffdüse zur Zugabe eines wesentlich geringeren Anteils an gasförmigem als an flüssigem und/oder überkritischem Treibstoff ausgelegt, beispielsweise von maximal 10 Massen%.

Vorzugsweise ist vorgesehen, dass das Leitungssystem Leitungsmittel zur Leitung des kryogenen Treibstoffes aus der Flüssigphase aus der Tankvorrichtung aufweist. Die Leitungsmittel können auch Verteilereinrichtungen für den kryogenen Treibstoff, Ventilmittel und dergleichen umfassen. Zusätzlich kann vorteilhaft, insbesondere in Zusammenhang mit der weiteren Treibstoffdüse, vorgesehen sein, dass das Leitungssystem Leitungsmittel zur Leitung des kryogenen Treibstoffes aus der Gasphase der Tankvorrichtung aufweist. So kann der gasförmige kryogene Treibstoff aus der Gasphase der Tankvorrichtung entnommen werden. Eine Verdampfungseinrichtung zur Erzeugung des gasförmigen Treibstoffes aus flüssigem und/oder überkritischem kryogenen Treibstoff ist dann nicht erforderlich.

Vorzugsweise ist in dem Leitungssystem keine Vorrichtung zur Erwärmung des kryogenen Treibstoffes angeordnet, und/oder sind insbesondere die Leitungsmittel zumindest abschnittsweise (insbesondere außerhalb des Turbinengehäuses) isoliert ausgebildet, um Vereisung aufgrund gefrierender Luft (durch sich in der Umgebungsluft befindliches Wasser und/oder Niederschlag der normalerweise bei Umgebungstemperaturen gasförmigen Anteile der Außenluft, wie z. B. Stickstoff) an den Leitungsmitteln zu vermeiden.

Für eine schadstoffarme Verbrennung ist das Brennkammersystem vorzugsweise zur Verbrennung des kryogenen Treibstoffes in einem Fett-Mager-Verbrennungsprozess (RQL: Rich-Quench-Lean) ausgebildet.

Insbesondere in diesem Zusammenhang kann zweckmäßigerweise vorgesehen sein, dass die Brennkammer Brennkammerwände mit Mischluftöffnungen aufweist.

Günstigerweise umfasst das Leitungssystem zumindest eine Verdichtereinrichtung, die zwischen der Tankvorrichtung und der Injektoranordnung angeordnet ist. Insbesondere wird der kryogene Treibstoff durch die Verdichtereinrichtung vorzugsweise in jedem Betriebspunkt des Triebwerks auf einen Druck verdichtet, der oberhalb des kritischen Drucks des kryogenen Treibstoffes liegt. Auf diese Weise wird der kryogene Treibstoff, insbesondere bei jedem Betriebspunkt, in überkritischem Zustand in die Brennkammer eingebracht.

In einer bevorzugten Ausbildungsvariante umfasst das Leitungssystem zumindest eine Zumesseinrichtung, die derart ausgelegt ist, dass der Druck unmittelbar stromab der Zumesseinrichtung oberhalb eines kritischen Drucks des kryogenen Treibstoffes liegt. Zu diesem Zweck erzeugt die Zumesseinrichtung insbesondere einen entsprechend geringen Druckverlust. Die Auslegung der Zumesseinrichtung erfolgt zweckmäßigerweise insbesondere in Abstimmung auf die Verdichtereinrichtung, die einen entsprechenden Vordruck, stromauf der Zumesseinrichtung, erzeugt.

Bei dem Verfahren zum Betreiben eines Antriebssystems eines Flugzeugs, das nach einem der vorhergehenden Ansprüche ausgebildet ist, ist vorgesehen, dass kryogener Treibstoff aus einer Flüssigphase einer kryogenen Tankvorrichtung zur Speicherung des kryogenen Treibstoffes in flüssigem Zustand entnommen und einer Brennkammer eines Brennkammersystems in, insbesondere überkritischem und/oder flüssigem, kryogenem Zustand zugeführt wird. Insbesondere in jedem Betriebspunkt des Triebwerks, in dem eine Treibstoffzufuhr erforderlich ist, erfolgt die Entnahme aus der Flüssigphase (und ggf. zusätzlich dazu eine Entnahme aus der Gasphase).

Vorzugsweise wird der kryogene Treibstoff einer Injektoreinheit des Brennkammersystems, vorzugsweise in jedem Betriebspunkt, bei einem Druck zugegeben, der einem Druck oberhalb des kritischen Drucks des kyogenen Treibstoffes entspricht. Auf diese Weise erfolgt die Zugabe insbesondere in jedem Betriebspunkt in überkritischem Zustand. Bei geringeren Betriebsdrücken innerhalb der Brennkammer, unterhalb des kritischen Drucks, fällt über die Brennstoffdüse ein entsprechend hoher Druck ab.

In einer Verfahrensvariante kann vorgesehen sein, dass der kryogene Treibstoff aus einer Gasphase innerhalb der Tankvorrichtung entnommen und der Brennkammer über eine Treibstoffdüse zur Zugabe von flüssigem Treibstoff und/oder über eine weitere Treibstoffdüse zur Zugabe von gasförmigem Treibstoff zugegeben wird.

Dies kann beispielsweise bei einem "Sicherheitsabbrand" der Fall sein, bei Übersteigen eines definierten, sicherheitskritischen Drucks in einer Gasphase der Tankvorrichtung. Der Sicherheitsabbrand dient der Rückführung des Druckniveaus innerhalb der Tankvorrichtung in einen sicheren Druckbereich. Dabei wird zur Druckreduktion innerhalb der Tankvorrichtung gasförmiger kryogener Treibstoff mittels der Leitungsmittel aus der Tankvorrichtung entnommen und der Brennkammer zugeführt, wo er kontrolliert abgebrannt werden kann. Die Zufuhr kann, falls vorhanden, über die weitere Treibstoffdüse erfolgen und/oder (aufgrund der in der Regel vergleichsweise geringen Massenströme an gasförmigem kryogenen Treibstoff) über die Treibstoffdüse zur Zufuhr des Treibstoffes in flüssigem Zustand. Eine gesonderte Abbrennvorrichtung, neben dem Brennkammersystem, ist nicht erforderlich.

Alternativ oder zusätzlich kann gasförmiger Treibstoff zur Vorwärmung des Triebwerks mittels des Brennkammersystems, insbesondere vor regulärem Betrieb des Triebwerks (unter Schuberzeugung) verwendet werden, insbesondere ebenfalls unter Verwendung der weiteren Treibstoffdüse und/oder der Treibstoffdüse zur Zufuhr des Treibstoffes in flüssigem Zustand.

Alternativ oder zusätzlich kann gasförmiger Treibstoff zur Stabilisierung des Verbrennungsprozesses innerhalb des Brennkammersystems in einigen Betriebsphasen des regulären Betriebs mit dem flüssigen und/oder überkritischen Treibstoff, parallel zu diesem, verwendet werden.

Nachfolgend wird die Erfindung anhand eines Ausführungsbeispiels unter Bezugnahme auf die Zeichnung näher erläutert. Es zeigt:

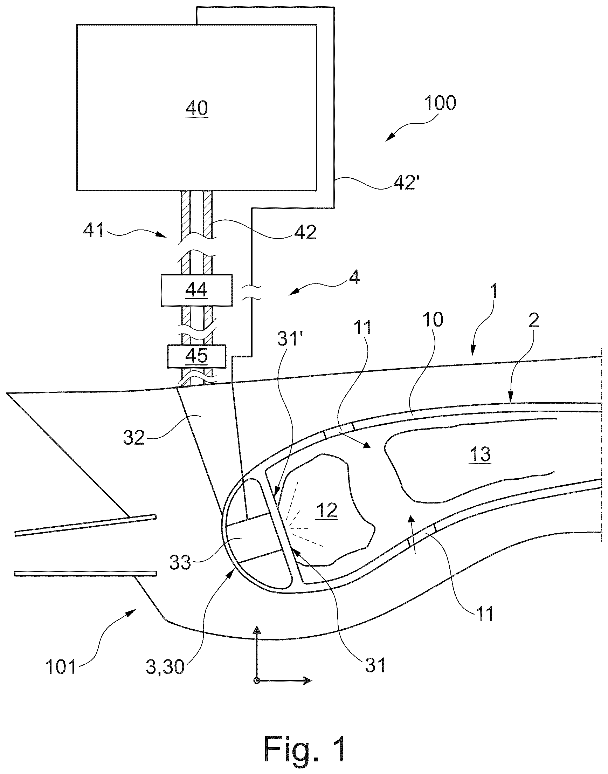

- Fig. 1: eine schematische Ansicht eines Antriebssystems für ein Flugzeug, mit einer Treibstoffperipherie und einem Teil eines Triebwerks mit einem Brennkammersystem in einem Längsschnitt.

Fig. 1 zeigt ein Antriebssystem 100 für ein Flugzeug in schematischer Ansicht. Das Antriebssystem 100 umfasst zumindest ein Triebwerk 101, von welchem in Fig. 1 ein Teil eines heißen Bereichs, mit zumindest einem Brennkammersystem 1, dargestellt ist. Ferner umfasst das Antriebssystem 100 eine Treibstoffperipherie 4.

Das Brennkammersystem 1 weist zumindest eine Brennkammer 2 auf, die beispielsweise ringförmig umlaufend um eine (in Fig. 1 nicht dargestellte) Welle des Triebwerks ausgebildet sein kann. Weiterhin weist das Brennkammersystem 1 zumindest eine Injektoranordnung 3 auf, mit zumindest einer Injektoreinheit 31, die insbesondere als Düsenbaugruppe mit einem Düsenhals 32 und einem Düsenhauptkörper 33 ausgestaltet ist. Der Injektoreinheit 30 ist zumindest eine Treibstoffdüse 31 zur Zugabe von Treibstoff in die Brennkammer 2 zugeordnet.

Die Treibstoffperipherie 4 ist zur Zufuhr von kryogenem Treibstoff (Treibstoff in kryogenem Zustand), insbesondere Wasserstoff, an das Brennkammersystem 1 ausgebildet. Zu diesem Zweck umfasst die Treibstoffperipherie 4 eine Tankvorrichtung 40 zur Speicherung des kryogenen Treibstoffes in flüssigem Zustand, bei einem Druck von beispielsweise zwischen 2 bar und 4 bar und einer Temperatur von beispielsweise zwischen 5 K und 10 K. Zudem umfasst die Treibstoffperipherie 4 ein Leitungssystem 41 zur Leitung des kryogenen Treibstoffes an die zumindest eine Injektoranordnung 3. Das Leitungssystem 41 weist zwischen der Tankvorrichtung 40 und der Injektoreinheit 30 Leitungsmittel 42 auf. In den Leitungsmitteln 42 sind vorzugsweise zumindest eine Verdichtereinrichtung 44 zur Anhebung des Drucks innerhalb des kryogenen Treibstoffstroms im Betrieb, von dem Druckniveau innerhalb der Tankvorrichtung 40 auf ein zur Einbringung in die Brennkammer 2 erforderliches Druckniveau, sowie eine Zumesseinrichtung 45 zur Einstellung eines erforderlichen Treibstoffstroms angeordnet. Zudem können weitere, in Fig. 1 nicht gezeigte Komponenten, Ventil- und/oder Verteilereinrichtungen, im Verlauf der Leitungsmittel 42 angeordnet und/oder von den Leitungsmitteln 42 gebildet sein.

Aus dem Stand der Technik ist bekannt, dem kryogenen Treibstoff vor Einbringung in die Brennkammer 1 mittels zumindest einer Wärmeübertragungseinrichtung Wärmeenergie zuzuführen, insbesondere zu dessen Verdampfung und Zugabe in die Brennkammer 1 in gasförmigem Zustand. Durch die Verdampfung wird in der Regel eine Zunahme des Volumenstroms erreicht.

Bei dem erfindungsgemäßen Antriebssystem 100 ist die Treibstoffdüse 31 zur Zugabe von Treibstoff in flüssigem Zustand, insbesondere als Spraydüse, mit einer Zerstäuberanordnung, ausgebildet. Die Zerstäuberanordnung kann beispielsweise als Druckzerstäuber oder Airblast-Zerstäuber ausgestaltet sein.

Die Injektoreinheit 30 kann zur Ausbildung eines drallstabilisierten Verbrennungsprozesses ausgelegt sein.

Eine Vorrichtung zur Verdampfung, insbesondere (gezielten) Erwärmung, des kryogenen Treibstoffes, z. B. eine Wärmeübertragungseinrichtung zur Zufuhr von Wärmeenergie in den kryogenen Treibstoff, ist nicht vorhanden. Der kryogene Treibstoff wird im Betrieb in überkritischem und/oder flüssigem, kryogenem Zustand in die Brennkammer 2 eingebracht.

Vorzugsweise sind die Leitungsmittel 42 zumindest abschnittsweise gegenüber der Umgebung isoliert, um einem Gefrieren von Luft an den Leitungsmitteln 42 entgegenzuwirken.

Die Leitungsmittel 42 sind derart an der Tankvorrichtung 40 angeordnet, dass der kryogene Treibstoff aus der kryogenen Flüssigphase aus der Tankvorrichtung 40 entnommen wird.

Vorzugsweise umfasst das Leitungssystem 41 weiterhin Leitungsmittel 42', welche zur Entnahme des kryogenen Treibstoffes aus der Gasphase innerhalb der Tankvorrichtung 40 an selbiger angeordnet sind. Im Verlauf der Leitungsmittel 42' können ebenfalls eine Verdichtereinrichtung und/oder eine Zumesseinrichtung angeordnet sein (in Fig. 1 nicht gezeigt). Mittels der Leitungsmittel 42' kann in verschiedenen Betriebsszenarien alternativ oder zusätzlich zur Entnahme des flüssigen kryogenen Treibstoffes gasförmiger kryogener Treibstoff aus der Tankvorrichtung 40 entnommen werden.

Dies kann beispielsweise bei einem sogenannten "Sicherheitsabbrand" der Fall sein, wenn, z. B. aufgrund Sonneneinstrahlung bei einem nicht betriebenen Flugzeug, der Druck innerhalb der Tankvorrichtung 40 über einen definierten, sicherheitskritischen Druck ansteigt. Dann kann zur Druckreduktion innerhalb der Tankvorrichtung 40 gasförmiger kryogener Treibstoff mittels der Leitungsmittel 42' aus der Tankvorrichtung 40 entnommen und der Brennkammer 2 zugeführt werden, wo er kontrolliert abgebrannt werden kann. Eine gesonderte Abbrennvorrichtung, neben dem Brennkammersystem 1, ist nicht erforderlich.

Auch ist es möglich, den gasförmigen kryogenen Treibstoff aus der Tankvorrichtung 40 für einen Vorwärmbetrieb des Triebwerks 101, vor dem Hauptbetrieb mit dem kryogenen Treibstoff aus der Flüssigphase, d. h. insbesondere alternativ zu diesem, zu verwenden.

Möglich ist auch eine Verwendung des gasförmigen kryogenen Treibstoffes während des Betriebs des Triebwerks 101, parallel zu der Verwendung des kryogenen Treibstoffes aus der Flüssigphase, zur Stabilisierung des Verbrennungsprozesses in zumindest einigen Betriebsphasen.

Insbesondere zur Verwendung des kryogenen Treibstoffes sowohl aus der Flüssigphase als auch aus der Gasphase des Treibstofftanks 40, d. h. parallel zueinander, z. B. zur Stabilisierung des Verbrennungsprozesses, kann das Antriebssystem 100 weiterhin zumindest eine weitere Treibstoffdüse 31' zur Zugabe von gasförmigem Treibstoff in die Brennkammer 2 umfassen. Die weitere Treibstoffdüse 31' kann in der Injektoreinheit 30 integriert oder in einer separaten Injektoreinheit 30 angeordnet sein.

Bei dem "Sicherheitsabbrand" und/oder Vorwärmbetrieb kann der gasförmige Treibstoff auch über die Treibstoffdüse 31 zur Zugabe von flüssigem Treibstoff geführt werden. Aufgrund des in der Regel wesentlich geringeren Massenstroms an gasförmigem Treibstoff für diese Betriebsarten ist in der Regel der hierbei vorgesehene Strömungsdurchmesser ausreichend.

Für ein möglichst emissionsarmen Betrieb ist das Brennkammersystem 1 insbesondere zur Verbrennung des kryogenen Treibstoffes in einem Fett-Mager-Verbrennungsprozess (RQL: Rich-Quench-Lean) ausgebildet. Zu diesem Zweck umfasst insbesondere die Brennkammer 2 Brennkammerwände 10 mit vorzugsweise mehreren Mischluftöffnungen 11. Die Mischluftöffnungen 11 sind derart angeordnet, dass innerhalb der Brennkammer 2 stromauf selbiger, d. h. im Wesentlichen zwischen der eingangsseitigen Injektoranordnung 3 und den Mischluftöffnungen 11, im Betrieb eine treibstoffreiche Zone 12 entsteht. Die Mischluftöffnungen 11 dienen nun zur Zugabe von Mischluft in die Verbrennungsgase der treibstoffreichen Zone 12, wodurch die Verbrennungsgase abgekühlt werden und eine treibstoffarme Zone 13 entsteht, in welcher die vollständige Abreaktion des Treibstoffes erfolgt. Die globale Luftzahl kann in der treibstoffreichen Zone 12 beispielsweise zwischen 0,1 und 1, vorzugsweise zwischen 0,3 und 0,8 betragen, in der treibstoffarmen Zone beispielsweise zwischen 1 und 12, vorzugsweise zwischen 2 und 8.

Die Zumesseinrichtung 45 ist vorzugsweise derart ausgelegt, dass der Druck des kryogenen Treibstoffes im Betrieb unmittelbar stromab der Zumesseinrichtung 45, stromauf der Injektoreinheit 30, stets oberhalb des kritischen Drucks des kryogenen Treibstoffes liegt. Bei Wasserstoff beträgt der kritische Druck rund 13 bar. Dazu fällt an der Zumesseinrichtung 45 ein entsprechend geringer Druck ab. Die Auslegung bzw. die Einstellung dieses Druckverlustes erfolgt insbesondere auch unter Berücksichtigung der Verdichtereinrichtung 44. Bei Betriebspunkten, wobei der Brennkammerdruck unterhalb des kritischen Drucks liegt, fällt dann ein entsprechend hoher Druck z. B. über die Treibstoffdüse 31 ab.

Im Betrieb des Triebwerks 101 wird der kryogene Treibstoff aus der Flüssigphase der Tankvorrichtung 40 entnommen und mittels der Leitungsmittel 42 der Verdichtereinrichtung 44 zugeführt. Innerhalb der Verdichtereinrichtung 44 wird der kryogene Treibstoff auf das erforderliche Druckniveau zur Einbringung in die Brennkammer 10, oberhalb des Brennkammerdrucks, verdichtet, welcher je nach Betriebspunkt beispielsweise zwischen 5 bar und 40 bar betragen kann. Vorzugsweise wird der Druck in dem kryogenen Treibstoff stets auf einem Druckniveau oberhalb des kritischen Drucks des kryogenen Treibstoffes, insbesondere Wasserstoff, angehoben, sodass der kryogene Treibstoff in überkritischem Zustand vorliegt. Mittels der Zumesseinrichtung 45 wird der Massenstrom des Treibstoffes entsprechend den Erfordernissen des aktuellen Betriebspunkts eingestellt. Vorzugsweise ist der Druckverlust über die Zumesseinrichtung 45 derart, dass der Druck weiterhin oberhalb des kritischen Drucks des kryogenen Treibstoffes liegt. Der kryogene Treibstoff wird nun in überkritischem Zustand an die Injektoreinheit 30 geleitet, wobei er sich um einige Kelvin erwärmen kann, beispielsweise auf bis zu 50 K oder 60 K, sich jedoch weiterhin in kryogenem (überkritischem) Zustand befindet. Mittels der Treibstoffdüse 31 wird der Treibstoff in kryogenem bzw. überkritischem Zustand unter Vergrößerung der Reaktionsoberfläche in die Brennkammer 2 eingebracht.

Mittels der nicht erfolgenden gezielten Vorwärmung des kryogenen Treibstoffes, unter Verzicht einer entsprechenden Vorwärmeinrichtung, und der Einbringung des kryogenen Treibstoffes in die Brennkammer 2 in überkritischem und/oder flüssigem Zustand wird vorteilhafterweise ein energie- und teileeffizientes Antriebssystem 100 bereitgestellt.

### Bezugszeichenliste

- 1: Brennkammersystem
- 10: Brennkammerwände
- 11: Mischluftöffnungen
- 12: treibstoffreiche Zone
- 13: treibstoffarme Zone
- 2: Brennkammer
- 3: Injektoranordnung
- 30: Injektoreinheit
- 31, 31': Treibstoffdüse
- 32: Düsenhals
- 33: Düsenhauptkörper
- 4: Treibstoffperipherie
- 40: Tankvorrichtung
- 41: Leitungssystem
- 42, 42': Leitungsmittel
- 44: Verdichtereinrichtung
- 45: Zumesseinrichtung
- 100: Antriebssystem
- 101: Triebwerk

## Patentansprüche

1. Antriebssystem (100) für ein Flugzeug, mit einer Treibstoffperipherie (4) und zumindest einem Triebwerk (101) umfassend zumindest ein Brennkammersystem (1),
wobei das Brennkammersystem (1) eine Brennkammer (2) und zumindest eine Injektoranordnung (3) aufweist, wobei die Injektoranordnung (3) zumindest eine Injektoreinheit (30) mit zumindest einer Treibstoffdüse (31) umfasst,
und wobei die Treibstoffperipherie (4) zumindest eine Tankvorrichtung (40) zur Speicherung von kryogenem Treibstoff und ein Leitungssystem (41) zur Leitung des kryogenen Treibstoffes an die zumindest eine Injektoranordnung (3) aufweist,
**dadurch gekennzeichnet,**
**dass** die zumindest eine Treibstoffdüse (31) zur Zugabe von flüssigem Treibstoff in die Brennkammer (2) ausgebildet ist.

2. Antriebssystem (100) nach Anspruch 1,
**dadurch gekennzeichnet,**
**dass** die zumindest eine Treibstoffdüse (31) als Spraydüse, mit einer Zerstäuberanordnung, ausgebildet ist.

3. Antriebssystem (100) nach Anspruch 1 oder 2,
**dadurch gekennzeichnet,**
**dass** die Injektoranordnung (3) zumindest eine weitere Injektoreinheit und/oder zumindest eine weitere Treibstoffdüse (31') zur Zugabe von gasförmigem Treibstoff in die Brennkammer (2) aufweist.

4. Antriebssystem (100) nach einem der vorhergehenden Ansprüche,
**dadurch gekennzeichnet,**
**dass** das Leitungssystem (41) Leitungsmittel (42) zur Leitung des kryogenen Treibstoffes aus der Flüssigphase aus der Tankvorrichtung (40) aufweist, und vorzugsweise Leitungsmittel (42') zur Leitung des kryogenen Treibstoffes aus der Gasphase der Tankvorrichtung (40) aufweist.

5. Antriebssystem (100) nach einem der vorhergehenden Ansprüche,
**dadurch gekennzeichnet,**
**dass** in dem Leitungssystem (41) keine Vorrichtung zur Erwärmung des kryogenen Treibstoffes angeordnet ist, wobei insbesondere die Leitungsmittel (42, 43) zumindest abschnittsweise isoliert ausgebildet sind.

6. Antriebssystem (100) nach einem der vorhergehenden Ansprüche,
**dadurch gekennzeichnet,**
**dass** das Brennkammersystem (1) zur Verbrennung des kryogenen Treibstoffes in einem Fett-Mager-Verbrennungsprozess ausgebildet ist.

7. Antriebssystem (100) nach einem der vorhergehenden Ansprüche,
**dadurch gekennzeichnet,**
**dass** die Brennkammer (2) Brennkammerwände (10) mit Mischluftöffnungen (11) aufweist.

8. Antriebssystem (100) nach einem der vorhergehenden Ansprüche,
**dadurch gekennzeichnet,**
**dass** das Leitungssystem (41) zumindest eine Verdichtereinrichtung (44) umfasst.

9. Antriebssystem (100) nach einem der vorhergehenden Ansprüche,
**dadurch gekennzeichnet,**
**dass** das Leitungssystem (41) zumindest eine Zumesseinrichtung (45) umfasst, die derart ausgelegt ist, dass der Druck unmittelbar stromab der Zumesseinrichtung (45) oberhalb eines kritischen Drucks des kryogenen Treibstoffes liegt.

10. Verfahren zum Betreiben eines Antriebssystems (100) eines Flugzeugs, das nach einem der vorhergehenden Ansprüche ausgebildet ist, bei dem kryogener Treibstoff aus einer Flüssigphase einer kryogenen Tankvorrichtung (40) zur Speicherung des kryogenen Triebstoffes in flüssigem Zustand entnommen und einer Brennkammer (2) eines Brennkammersystems (1) in kryogenem Zustand zugeführt wird.

11. Verfahren nach Anspruch 10,
**dadurch gekennzeichnet,**
**dass** der kryogene Treibstoff einer Injektoreinheit (30) des Brennkammersystems (1), vorzugsweise in jedem Betriebspunkt, bei einem Druck zugegeben wird, der einem Druck oberhalb des kritischen Drucks des kyogenen Treibstoffes entspricht.

12. Verfahren nach Anspruch 10 oder 11,
**dadurch gekennzeichnet,**
**dass** der kryogene Treibstoff aus einer Gasphase innerhalb der Tankvorrichtung (40) entnommen und der Brennkammer (2) über eine Treibstoffdüse (31) zur Zugabe von flüssigem Treibstoff und/oder über eine weitere Treibstoffdüse (31') zur Zugabe von gasförmigem Treibstoff zugegeben wird.

13. Verfahren nach Anspruch 12,
**dadurch gekennzeichnet,**
**dass** der gasförmige Treibstoff aus der Gasphase in die Brennkammer (2) zugegeben wird bei
- Übersteigen eines definierten Drucks in einer Gasphase der Tankvorrichtung (40) zur Durchführung eines Sicherheitsabbrands, und/oder
- zur Vorwärmung eines Triebwerks (101) mittels des Brennkammersystems (1), insbesondere vor regulärem Betrieb des Triebwerks (101), und/oder
- zur Stabilisierung des Verbrennungsprozesses innerhalb des Brennkammersystems (1).
